# FASCICULE DE BREVET EUROPEEN

(11) **EP 0 387 135 B1**
(45) Date de publication et mention de la délivrance du brevet: **06.04.1994**
(21) Numéro de dépôt: 90400593.1
(22) Date de dépôt: 05.03.1990
(51) Int. Cl.: F16H 7/12

(54) **Dispositif de tension d'une courroie de transmission de puissance**
Treibriemenspanner
Belt-tensioning device for a power transmission

(30) Priorité: 06.03.1989 FR 8902888
(43) Date de publication de la demande: 12.09.1990
(73) Titulaire: HUTCHINSON, F-75008 Paris (FR)
(72) Inventeur: Georget, Pierre, F-37170 Chambray Les Tours (FR)
(74) Mandataire: Ramey, Daniel

(56) Documents cités:
- EP-A- 0 042 068
- US-A- 4 504 254
- US-A- 4 557 709
- US-A- 4 571 223

## Description

L'invention concerne un dispositif de tension d'une courroie de transmission de puissance, destiné en particulier à l'industrie automobile et à l'électroménager comme défini dans le préambule de la revendication 1 connu du document US-A 4571 223.

On utilise de façon classique, pour tendre les courroies de transmission de puissance, aussi des dispositifs à ressorts de tension qui sont accrochés en un point fixe et sur l'axe d'une poulie ou d'un galet sur lequel passe la courroie. Ces dispositifs à ressorts ont une fréquence propre de résonance, et sont sensibles à la fatigue, à la corrosion et aux variations de température. Il faut de plus, souvent, les associer à des moyens d'amortissement des vibrations et des mouvements oscillatoires, ce qui augmente leur coût.

On a également proposé d'utiliser des dispositifs hydrauliques pour mettre sous tension les courroies de transmission de puissance, mais ces dispositifs sont relativement onéreux.

L'invention a précisément pour objet un dispositif de tension d'une courroie de transmission, qui soit simple, efficace, peu coûteux et qui possède des qualités propres à'amortissement des vibrations et mouvements oscillatoires.

Elle propose, à cet effet, un dispositif comprenant les éléments comme défini dans la revendication 1.

Dans un mode de réalisation préféré de l'invention, l'élément élastiquement déformable est constitué par un tronçon de courroie plate de transmission, ou par une courroie plate en boucle fermée.

Le dispositif selon l'invention est particulièrement simple et peu coûteux puisqu'il repose sur l'utilisation d'une bande de matériau élastomère élastiquement déformable qui est constituée sensiblement comme une courroie plate de transmission, comprenant une nappe de câblés, noyée dans ladite bande de matériau élastomère. La technologie de fabrication des courroies de transmission permet, sans difficultés, de réaliser cet élément avec les caractéristiques voulues de raideur et de capacité d'allongement. De plus, les caractéristiques force-allongement d'un tel élément possèdent une certaine hystérésis ce qui permet d'amortir, de façon suffisante, les vibrations et mouvements oscillatoires.

Selon une autre caractéristique de l'invention, l'élément élastiquement déformable précité est enroulé sur lui-même.

Lorsque le jeu à rattraper de la courroie est relativement important, on peut ainsi conserver un taux d'allongement acceptable de l'élément élastiquement déformable.

Selon encore une autre caractéristique de l'invention, des feuilles ou bandes minces de matière à coefficient de frottement déterminé sont Interposées entre les épaisseurs superposées de l'élément élastiquement déformable.

Les différentes spires de l'élément élastiquement déformable peuvent ainsi se déplacer les unes par rapport aux autres, avec un frottement prédéterminé, qui peut être soit faible, soit relativement important, selon les cas d'utilisation du dispositif de tension.

Dans le dispositif selon l'invention, l'élément élastiquement déformable est enroulé sur une pièce cylindrique mobile en rotation dont il est solidaire par une extrémité, et qui est elle-même reliée à l'axe d'une poulie par un excentrique, tandis que l'autre extrémité de l'élément élastiquement déformable est reliée à un point fixe ; ou bien cet élément élastiquement déformable est enroulé sur un dispositif fixe dont il est solidaire par une extrémité, tandis que son extrémité est reliée à l'axe d'une poulie par une pièce mobile en translation.

On obtient ainsi un dispositif du type rotatif, ou un dispositif à mouvement de translation.

Enfin, on prévoit dans tous les cas une butée limitant la course de la pièce mobile du dispositif dans le sens correspondant à la détente de l'élément élastiquement déformable.

Cela permet de conserver une force de tension prédéterminée.

Dans la description qui suit, faite à titre d'exemple, on se réfère aux dessins annexés dans lesquels :
la figure 1 est une vue schématique d'un dispositif de tension de courroie selon l'invention ;
la figure 2 représente schématiquement une variante de réalisation de ce dispositif ;
la figure 3 est une vue schématique en coupe, à plus grande échelle, représentant la disposition de l'élément élastiquement déformable et de feuilles de matière à coefficient de frottement déterminé ;
la figure 4 est un graphe représentant une caractéristique tension-allongement d'un élément élastiquement déformable selon l'invention ;
la figure 5 est une vue en perspective éclatée d'un exemple de réalisation d'un dispositif selon l'invention.

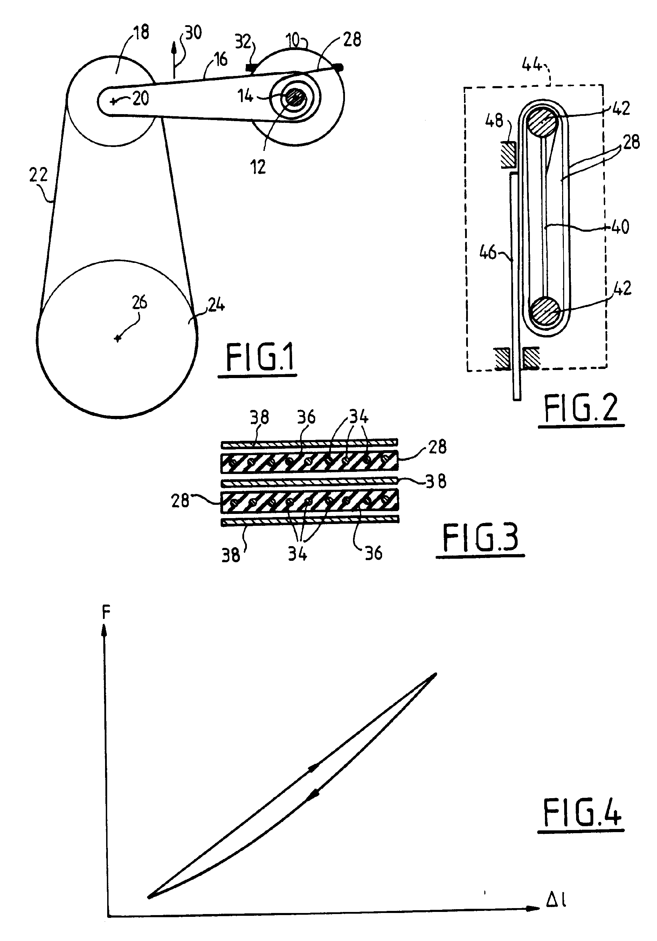

On se réfère d'abord à la figure 1, où on a représenté schématiquement un exemple d'utilisation d'un dispositif tendeur de courroie selon l'invention.

Ce dispositif comprend essentiellement une base fixe 10 sur laquelle est montée en rotation autour d'un axe 12 une pièce sensiblement cylindrique 14 solidaire d'un bras de levier 16 qui porte une poulie 18 dont l'axe de rotation 20 est parallèle à celui de la pièce cylindrique 14.

Une courroie 22 passe sur la poulie 18 et sur au moins une autre poulie 24 d'axe 26 parallèle aux axes 12 et 20 précités.

Le dispositif de tension selon l'invention comprend encore un élément élastiquement déformable 28 dont une extrémité est fixée à la pièce 14 et qui est enroulé sur cette pièce dans le sens des aiguilles d'une montre sur le dessin, son autre extrémité étant fixée à la base 10 précitée. Lorsque cet élément élastiquement déformable 28 est mis sous tension, il exerce sur le bras du levier 16 une force de rappel orientée dans le sens de la flèche 30. Une butée 32 est montée, par exemple de façon réglable, sur la base 10 pour limiter la rotation du bras 16 dans le sens des aiguilles d'une montre, pour empêcher une détente complète de l'élément élastiquement déformable 28 et conserver une valeur prédéterminée à la tension appliquée à la courroie 22.

Selon l'invention, l'élément élastiquement déformable 28 est constitué, comme on l'a représenté à titre d'exemple en figure 3, par une nappe de câblés 34 noyée dans une bande 36 de matière élastomère, telle que du caoutchouc par exemple.

Les câblés 34 sont déterminés et choisis de façon à présenter un faible module d'extension c'est-à-dire qu'une variation relativement faible de leur allongement ne va pas modifier sensiblement la traction exercée sur le bras 16.

On peut utiliser par exemple, pour former les câblés 34, des fils de "nylon" de 940 décitex retordus et adhérisés, du type 940x2 ou 940x4x2, tels que ceux entrant de façon classique dans la fabrication de courroies plates de transmission, la nappe de câblés 34 étant noyée dans une bande d'élastomère 36, dont le seul rôle est de solidariser les câblés 34 entre eux. Les techniques connues de fabrication de ces courroies permettent une réalisation homogène de la nappe de câblés 34, et donc de l'élément élastiquement déformable 28.

La figure 4 représente schématiquement un diagramme force-allongement d'un élément élastiquement déformable 28 selon l'invention, où l'on voit que la courbe de tension en fonction de l'allongement présente une hystérésis relativement faible, mais suffisante pour amortir au moins l'essentiel des vibrations et des mouvements oscillatoires appliqués au bras 16 du dispositif tendeur en fonctionnement.

La longueur de l'élément élastiquement déformable 28 est déterminée de façon à ce que son allongement par unité de longueur conserve une valeur acceptable.

Pour réduire les effets parasites liés aux frottements de l'élément 28 sur lui-même quand il est enroulé sur la pièce cylindrique 14, on prévoit, sur au moins une face de cet élément, une couche, une feuille ou un film 38 de matière possédant des caractéristiques de frottement déterminé, par exemple de "téflon" (polytétrafluoroéthylène) lorsqu'on veut assurer un glissement correct des différentes spires de l'élément 28 les unes sur les autres. On peut également utiliser une autre matière, ayant un coefficient de frottement plus important, lorsqu'on veut augmenter l'amortissement.

On a représenté en figure 2 une variante de réalisation du dispositif selon l'invention, qui est du type linéaire.

Dans cette figure, l'élément élastiquement déformable 28 est fixé par une extrémité à une tige ou plaque fixe 40 et est enroulé, comme un écheveau, sur deux tiges 42 montées fixement sur une base 44. L'autre extrémité de l'élément élastiquement déformable 28 est solidaire d'une barre 46 guidée en translation sur la base 44 et reliée, d'une façon non représentée, à l'axe d'une poulie sur lequel passe une courroie. Une butée 48 montée sur la base 44 coopère avec une extrémité de la barre 46 pour empêcher la détente complète de l'élément élastiquement déformable 28.

Ce dispositif fonctionne comme celui de la figure 1, à la seule différence que l'élément élastiquement déformable 28 exerce sur la barre 46 une force de traction sensiblement rectiligne, tandis qu'il exerce un couple de rappel sur le bras 16 du dispositif de la figure 1.

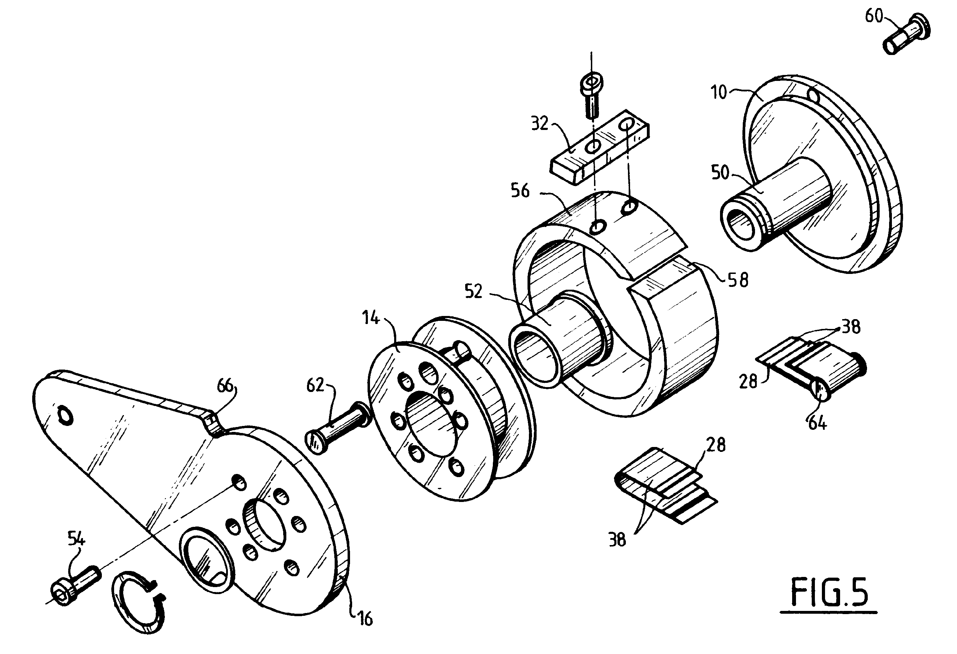

Un mode de réalisation pratique du dispositif de la figure 1 a été représenté, à titre d'exemple, en figure 5.

On retrouve dans cette figure la base 10 dont est solidaire un arbre cylindrique 50 sur lequel la pièce cylindrique 14 en forme de bobine est montée à rotation, par l'intermédiaire d'un palier ou coussinet auto-lubrifié 52. Des vis 54 permettent la fixation du bras 16 sur une face de la bobine 14, tandis qu'une pièce tubulaire 56, comprenant une fente oblique 58, et ayant un diamètre supérieur à celui de la bobine 14, est montée fixement sur la base 10 au moyen de vis 60, de façon à entourer coaxialement la bobine 14. Une extrémité de l'élément élastiquement déformable 28, garni des couches ou bandes 38 de matière à coefficient de frottement déterminé, est fixée sur la bobine 14 au moyen d'un axe d'accrochage 62 traversant les joues de la bobine. De même, l'autre extrémité de l'élément élastiquement déformable 28 passe à travers la fente 58 de l'élément tubulaire 56 et s'enroule sur un axe d'accrochage 64, qui forme un moyen de butée et de retenue venant s'appliquer sur le bord extérieur de la fente 58.

En fait, dans cette réalisation, l'élément élastiquement déformable 28 est une courroie plate sans fin, en boucle fermée, possédant les caractéristiques voulues tension-allongement, qui est aplatie sur elle-même.

La butée réglable 32 est constituée par une barrette fixée par vissage sur la périphérie de l'élément annulaire 56 et dépassant du côté du bras 16, dont le bord correspondant comprend une encoche 66 de réception de la butée 32.

On comprend qu'un dispositif tendeur selon l'invention est peu coûteux, puisqu'il comprend essentiellement un montage simple mobile en rotation ou en translation, et un élément élastiquement déformable formé par une courroie plate ou un tronçon de courroie plate à faible module d'extension. On peut notamment réaliser des dispositifs tendeurs ayant des formes variées, l'élément élastiquement déformable se prêtant bien à l'enroulement sur lui-même.

## Revendications

1. Dispositif de tension d'une courroie de transmission de puissance, comprenant un élément élastiquement déformable (28) à bande (36) de matériau de type élastomère qui est monté entre un point fixe et l'axe d'une poulie (18) sur laquelle passe la courroie (22), et qui est agencé pour mettre la courroie sous tension lorsqu'il est lui-même sous tension, caractérisé en ce qu'une nappe de câblés (34) à faible module d'extension est noyée dans ladite bande (36) de matériau de type élastomère.

2. Dispositif selon la revendication 1, caractérisé en ce que l'élément élastiquement déformable (28) est constitué par un tronçon de courroie plate de transmission, ou par une courroie plate en boucle fermée.

3. Dispositif selon la revendication 1 ou 2, caractérisé en ce que l'élément élastiquement déformable (28) est enroulé sur lui-même.

4. Dispositif selon la revendication 3, caractérisé en ce que des feuilles ou bandes minces (38) de matière à coefficient de frottement déterminé sont interposées entre les épaisseurs superposées de l'élément élastiquement déformable (28).

5. Dispositif selon l'une des revendications 1 à 4, caractérisé en ce que l'élément élastiquement déformable (28) est enroulé sur une pièce cylindrique (14) mobile en rotation, dont il est solidaire par une extrémité, et qui est elle-même reliée à l'axe d'une poulie (18) par un bras de levier, tandis que l'autre extrémité de l'élément élastiquement déformable est reliée à un point fixe.

6. Dispositif selon l'une des revendications 1 à 4, caractérisé en ce que l'élément élastiquement déformable (28) est enroulé sur un dispositif fixe (40,42) dont il est solidaire par une extrémité, tandis que son autre extrémité est reliée à l'axe d'une poulie par une pièce (46) mobile en translation.

7. Dispositif selon la revendication 5 ou 6, caractérisé en ce qu'il comprend une butée (32,48) limitant la course de la pièce mobile (16,46) dans le sens correspondant à la détente de l'élément élastiquement déformable (28).

## Patentansprüche

1. Spannvorrichtung für einen Antriebsriemen mit einem elastisch deformierbaren Element (28) in Form eines Bandes (36) aus einem elastomeren Material, das zwischen einem festen Punkt und der Achse einer Rolle (18) befestigt ist, über welche der Riemen (22) geführt ist, und welches dazu vorgesehen ist, den Riemen unter Spannung zu halten, wenn es selbst unter Spannung steht, **dadurch gekennzeichnet, daß** in diesem elastomeren Band (36) eine Seileinlage (34) mit geringem Ausdehnungskoeffizienten eingebettet ist.

2. Vorrichtung nach Anspruch 1, **dadurch gekennzeichnet, daß** das elastisch deformierbare Element (28) durch ein Teilstück eines flachen Antriebsriemens oder einen flachen, in sich geschlossenen Riemen gebildet wird.

3. Vorrichtung nach Anspruch 1 oder 2, **dadurch gekennzeichnet, daß** das elastisch deformierbare Element (28) eingerollt ist.

4. Vorrichtung nach Anspruch 3, **dadurch gekennzeichnet, daß** zwischen den übereinander angeordneten Abschnitten des elastisch deformierbaren Elementes (28) dünne Platten oder Bänder (38) mit vorbestimmtem Reibungskoeffizienten angeordnet sind.

5. Vorrichtung nach einem der Ansprüche 1 bis 4, **dadurch gekennzeichnet, daß** das elastisch deformierbare Element (28) um ein drehbares Zylinderstück (14) gerollt ist, an welchem es mit einem Ende befestigt ist und welches über einen Hebelarm mit der Achse einer Rolle (18) verbunden ist, wogegen das andere Ende des elastisch deformierbaren Elementes mit einem festen Punkt verbunden ist.

6. Vorrichtung nach einem der Ansprüche 1 bis 4, **dadurch gekennzeichnet, daß** das elastisch deformierbare Element (28) um eine starre Vorrichtung (40, 42) gerollt ist, an welcher es mit einem Ende befestigt ist, wogegen das andere Ende über einen längsbeweglichen Teil (46) mit der Achse einer Rolle verbunden ist.

7. Vorrichtung nach Anspruch 5 oder 6, **dadurch gekennzeichnet, daß** sie einen Anschlag (32, 48) aufweist, welcher die Bewegung des beweglichen Teiles (16, 46) in einer Weise begrenzt, die einer Arretierung des elastisch deformierbaren Elementes entspricht.

## Claims

1. A device for tensioning a power transmission belt, the device comprising an elastically-deformable element (28) having a strip (36) of elastomer type material which is mounted between a fixed point and the shaft of a pulley (18) over which the belt (22) passes, and which is arranged to put the belt under tension when it is itself under tension, the device being characterized in that a layer of cords (34) having a low modulus of extension is embedded in said strip (36) of elastomer type material.

2. A device according to claim 1, characterized in that the elastically-deformable element (28) is constituted by a length of flat transmission belt, or by a closed loop of flat belt.

3. A device according to claim 1 or 2, characterized in that the elastically-deformable element (28) is wound on itself.

4. A device according to claim 3, characterized in that thin strips or sheets (38) of material having a determined coefficient of friction are interposed between superposed thicknesses of the elastically-deformable element (28).

5. A device according to any one of claims 1 to 4, characterized in that the elastically-deformable element (28) is wound on a cylindrical part (14) which is rotatable, and has one end fixed thereto, and which is itself connected to the shaft of a pulley (18) by a lever arm, while the other end of the elastically-deformable element is connected to a fixed point.

6. A device according to any one of claims 1 to 4, characterized in that the elastically-deformable element (28) is wound on a fixed device (40, 42) to which it is fixed via one end, whereas its other end is connected to the shaft of a pulley by means of a part (40) which is moveable in translation.

7. A device according to claim 5 or 6, characterized in that it includes an abutment (32, 48) limiting the stroke of the moving part (16, 46) in the direction corresponding to the elastically deformable element (28) relaxing.
